# EUROPÄISCHE PATENTSCHRIFT

(11) **EP 3 194 767 B1**
(45) Veröffentlichungstag und Bekanntmachung des Hinweises auf die Patenterteilung: **26.12.2018**
(21) Anmeldenummer: 15766443.4
(22) Anmeldetag: 16.09.2015
(51) Int. Cl.: F03D 80/00, F03D 80/50, F16P 3/08

(54) **WINDENERGIEANLAGE UND VERFAHREN ZUM STEUERN EINES ZUGANGES IN EINEM ABGESCHLOSSENEN BEREICH EINER WINDENERGIEANLAGE**
WIND TURBINE AND METHOD FOR CONTROLLING AN ACCESS POINT IN A CLOSED AREA OF A WIND TURBINE
ÉOLIENNE ET PROCÉDÉ DE COMMANDE DE L'ACCÈS À UNE ZONE FERMÉE D'UNE ÉOLIENNE

(30) Priorität: 18.09.2014 DE 102014218804
(43) Veröffentlichungstag der Anmeldung: 26.07.2017
(73) Patentinhaber: Wobben Properties GmbH, 26607 Aurich (DE)
(72) Erfinder: GEIKEN, Peter, 26721 Emden (DE); ROHLFSEN, Jörg, 26446 Friedeburg (DE); SCHMEES, Reiner, 49762 Lathen (DE)
(74) Vertreter: Eisenführ Speiser
(86) Internationale Anmeldenummer: PCT/EP2015/071158
(87) Internationale Veröffentlichungsnummer: WO 2016/042006

(56) Entgegenhaltungen:
- EP-A1- 1 984 932
- EP-A2- 1 985 334
- WO-A2-2010/102967
- DE-A1-102010 043 436
- US-A1- 2003 140 669

## Beschreibung

Die vorliegende Erfindung betrifft eine Windenergieanlage und ein Verfahren zum Steuern eines Zugangs in einem abgeschlossenen Bereich einer Windenergieanlage.

Die Rotornabe einer Windenergieanlage ist typischerweise mit dem Generator-Rotor bzw. mit einem Getriebe verbunden, so dass durch Drehung des Rotors auch der Generator-Rotor in Rotation versetzt wird und somit elektrische Energie erzeugt wird. Insbesondere beim Übergang zwischen dem feststehenden Bereich der Gondel und dem Bereich des sich drehenden Rotors kann es zu folgenschweren Unfällen kommen, wenn der Rotor nicht arretiert ist.

DE 10 2010 043 436 A1 beschreibt eine Vorrichtung zum Steuern der Verriegelung einer Öffnung einer Tür, welche zwischen einem stehenden Teil und einem drehenden Teil der Windenergieanlage vorgesehen ist. Die Vorrichtung weist Mittel zur Fixierung des drehenden Teils auf. Die Tür zwischen dem drehenden und stehenden Teil der Windenergieanlage weist eine Verriegelung auf, wobei eine Entriegelung der Tür ermöglicht wird, wenn die Mittel zur Fixierung des drehenden Teils den drehenden Teil fixiert haben.

In der prioritätsbegründenden deutschen Patentanmeldung hat das Deutsche Patent- und Markenamt die folgenden Dokumente recherchiert: DE 10 2006 006 949 A1, DE 10 2010 043 436 A1 und EP 2 740 928 A1.

Es ist somit eine Aufgabe der vorliegenden Erfindung, eine Windenergieanlage mit einem Zugangskontrollsystem vorzusehen, um einen Zugang von Personen zu gefährlichen Bereichen der Windenergieanlage zu vermeiden, solange der Rotor bzw. Teile des Rotors rotieren können.

Diese Aufgabe wird durch eine Windenergieanlage nach Anspruch 1 gelöst.

Somit wird eine Windenergieanlage mit einer Gondel mit einem feststehenden Bereich und einem Rotor, mindestens einer Arretiereinheit zum Arretieren des Rotors und einem Zugangskontrollsystem vorgesehen. Das Zugangskontrollsystem steuert eine Verriegelung mindestens einer Zugangstür zu mindestens einem abgeschlossenen Bereich in der Windenergieanlage in Abhängigkeit einer Arretierung des Rotors mittels der mindestens einen Arretiereinheit. Der abgeschlossene Bereich stellt einen Umrichterschrank mit einem Lüfter in der Gondel dar. Das Zugangskontrollsystem weist ein Schlüsseltransfersystem und eine Hydraulik-Steuereinheit zum Steuern der Arretiereinheit auf. Das Schlüsseltransfersystem weist eine Hydraulik-Schlüsseleinheit zum Verhindern einer unbeabsichtigten Aktivierung der Hydraulikeinheit und eine Zugangstür-Schlüsseleinheit zum Verriegeln oder Entriegeln der Zugangstür auf. Das Schlüsseltransfersystem weist mindestens einen ersten und zweiten Schlüssel auf, wobei mittels des ersten Schlüssels die Hydraulik-Steuereinheit verriegelt oder entriegelt wird und wobei mittels des zweiten Schlüssels die Zugangstür-Schlüsseleinheit verriegelt oder entriegelt wird. Das Schlüsseltransfersystem weist ferner eine Lüfter-Schlüsseltransfereinheit zum Aktivieren oder Deaktivieren des Lüfters auf. Ferner wird der erste Schlüssel der Hydraulik-Schlüsseleinheit zum Verriegeln oder Entriegeln der Lüfter-Schlüsseltransfereinheit verwendet und ein Lüfter-Schlüssel wird als zweiter Schlüssel zum Verriegeln oder Entriegeln der Zugangstür-Schlüsseleinheit verwendet. Die Lüfter-Schlüsseltransfereinheit weist eine erste und zweite Schlüsseleinheit auf. In die erste Schlüsseleinheit ist ein erster Lüfter-Schlüssel einführbar

Die zweite Schlüsseleinheit dient zur Aufnahme des ersten Schlüssels.

Gemäß einem weiteren Aspekt der vorliegenden Erfindung ist eine Steuereinheit zum Steuern der mindestens einen Arretiereinheit vorgesehen.

Gemäß einer weiteren Ausgestaltung der Erfindung ist die Arretiereinheit und/oder die mindestens eine Zugangstür hydraulisch betätigbar.

Gemäß der Erfindung werden die Zugangstüren nur dann entriegelt, wenn der Rotor bzw. Teile davon arretiert sind.

Der Lüfter stellt einen Lüfter eines Gondelumrichterschranks dar.

Die Erfindung betrifft den Gedanken, eine Windenergieanlage mit einem Zugangskontrollsystem vorzusehen, wobei ein Zugang zu einem Umrichterschrank mit einem Lüfter in der Gondel der Windenergieanlage nur dann freigegeben wird, wenn der Rotor bzw. drehbare Teile des Rotors arretiert sind.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht eines Generators einer Windenergieanlage gemäß einem ersten Ausführungsbeispiel,
- Fig. 3: zeigt eine schematische Darstellung eines Zugangskontrollsystems gemäß einem zweiten Ausführungsbeispiel,
- Fig. 4A-4C: zeigen jeweils ein Hydraulikschema des Zugangskontrollsystems gemäß einem dritten Ausführungsbeispiel,
- Fig. 5: zeigt eine schematische Darstellung einer Hydrauliksteuereinheit eines Zugangskontrollsystems gemäß einem vierten Ausführungsbeispiel,
- Fig. 6A - 6D: zeigen jeweils eine schematische Darstellung einer Funktionsweise eines Zugangskontrollsystems gemäß dem vierten Ausführungsbeispiel,
- Fig. 7A und 7B: zeigen jeweils eine Detailansicht der Hydrauliksteuereinheit von Fig. 5,
- Fig. 8: zeigt eine schematische Darstellung zur Veranschaulichung eines erfindungsgemäßen Schlüsseltransfersystems eines Zugangskontrollsystems,
- Fig. 9A und 9B: zeigen schematische Darstellungen eines Schlüsselsystems für einen Lüfter gemäß der Erfindung,
- Fig. 10: zeigt eine schematische Darstellung eines Ausschnitts eines Schlüsseltransfersystems gemäß der Erfindung,
- Fig. 11: zeigt einen weiteren Ausschnitt des Hydrauliksteuersystems von Fig. 5, und
- Fig. 12A - 12B: zeigen jeweils eine schematische Ansicht zur Veranschaulichung des erfindungsgemäßen Schlüsseltransfersystems eines Zugangskontrollsystems .

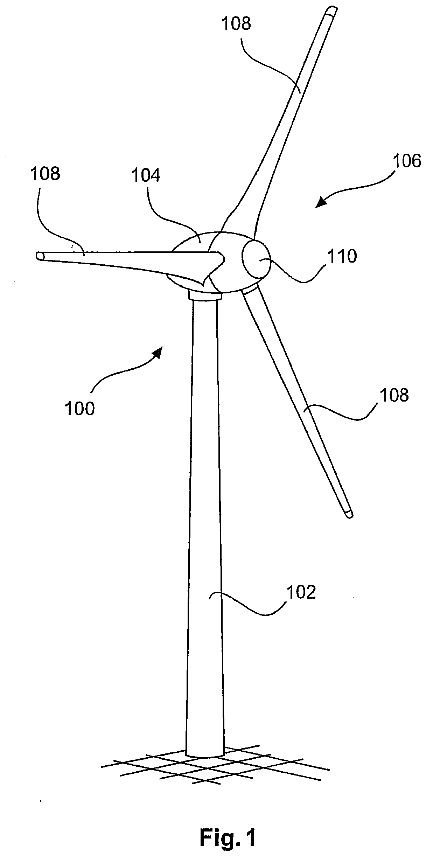

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit einer Rotornabe, drei Rotorblättern 108 und einem Spinner 110 angeordnet. Der Rotor 106 wird im Betrieb durch den Wind in eine Drehbewegung versetzt und treibt dadurch einen elektrischen Generator 200 in der Gondel 104 an.

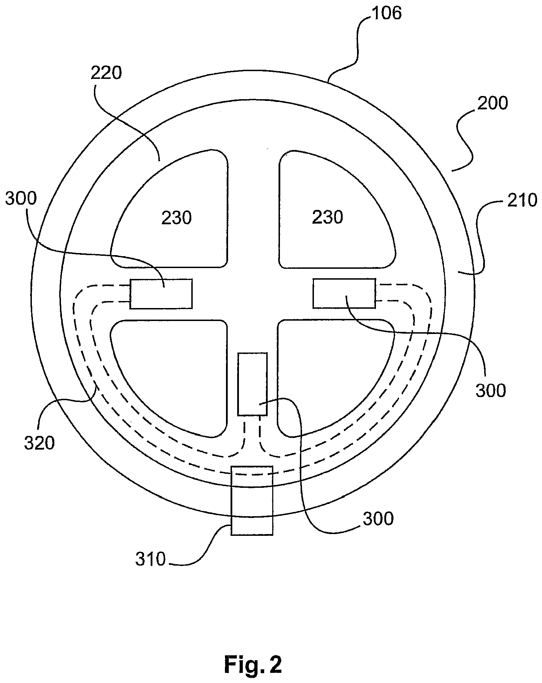

Fig. 2 zeigt eine schematische Schnittansicht eines Generators einer Windenergieanlage gemäß einem ersten Ausführungsbeispiel. Die Windenergieanlage gemäß dem ersten Ausführungsbeispiel basiert auf einer Windenergieanlage gemäß Fig. 1. Innerhalb der Gondel bzw. innerhalb des Rotors 106 bzw. am Übergang zwischen dem feststehenden Teil der Gondel und dem Rotor 106 ist ein Generator 200 vorgesehen. Der Generator 200 weist einen Generator-Stator 210 und einen Generator-Rotor 220 auf. An dem Generator-Rotor 220 ist mindestens eine Arretiereinheit 300 vorgesehen, welche dazu ausgestaltet ist, den Generator-Rotor 220 zu arretieren, so dass sich der Generator-Rotor 220 nicht weiterdrehen kann. Im Bereich des Generator-Rotors 220 kann mindestens ein Mannloch 230 oder eine Öffnung 230 vorgesehen sein. Durch dieses Mannloch bzw. die Öffnung 230 kann Servicepersonal in den vorderen Bereich der Windenergieanlage, nämlich den Spinner 110, gelangen. Dieser Spinner 110 ist Teil des Rotors 106 und dreht sich somit, wenn die Rotorblätter 108 sich drehen.

Zur Steuerung der Arretiereinheiten 300 ist eine (Hydraulik-)Steuereinheit 310 vorgesehen. Diese Steuereinheit 310 kann sich sowohl in dem Rotor 106 der Windenergieanlage als auch im feststehenden Teil der Gondel 104 befinden.

Die Arretiereinheiten 300 können beispielsweise hydraulisch betrieben werden, so dass beispielsweise Bolzen in entsprechende Öffnungen in dem Rotor z. B. des Generators bei Betätigung der Hydraulik verfahren werden können. Die Steuereinheit 310 kann beispielsweise als eine Hydrauliksteuereinheit 320 ausgestaltet sein und über die Hydraulikleitungen 320 die Arretiereinheiten 300 betätigen bzw. aktivieren.

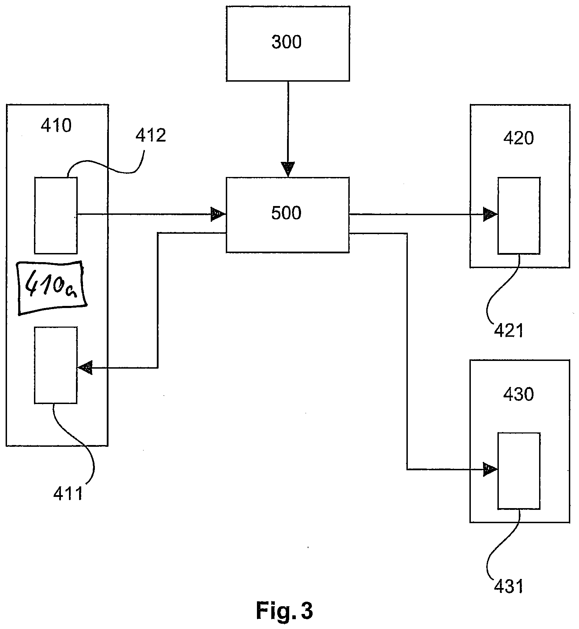

Fig. 3 zeigt eine schematische Darstellung eines Zugangskontrollsystems gemäß einem zweiten Ausführungsbeispiel der Erfindung. Im Bereich der Gondel 104 der Windenergieanlage 100 können mehrere Bereiche 410, 420, 430 vorgesehen sein, bei denen eine Zugangskontrolle beispielsweise zur Erhöhung der Arbeitssicherheit gewünscht ist. Der Zugang zu diesen Bereichen 410, 420, 430 soll nur dann freigegebenen werden, wenn dies aus arbeitssicherheitsrechtlichen Überlegungen unbedenklich erscheint. Hierzu sollte beispielsweise der Rotor 106 der Windenergieanlage bzw. drehbare Teile im Bereich der Gondel 104 arretiert bzw. festgesetzt sein.

Ein Hauptschalter für Ventilatoren oder Lüfter 410a in einem Gondelumrichterschrank 410 muss deaktiviert sein, bevor ein Zugang zu dem Gondelumrichterschrank 410 ermöglicht wird. Der zweite Bereich 420 kann beispielsweise der Bereich des Spinners 110 darstellen, der durch eine Zugangstür 421 gesichert werden kann. Der dritte Bereich 430 kann beispielsweise optional einen Bereich innerhalb des Generators darstellen. Dieser Bereich 430 kann ebenfalls durch eine Zugangstür 431 gesichert sein. Gemäß der Erfindung ist ein Zugangskontrollsystem 500 vorgesehen, welches sowohl mit den Arretiereinheiten 300 als auch mit den Zugangstüren 411, 421, 431 gekoppelt sein kann. Hierbei kann das Zugangskontrollsystem 500 den Zugang beispielswiese zu den Türen 421, 431 und 411 nur dann freigeben, wenn der Rotor mittels der Arretiereinheiten 300 arretiert ist. Es wird überprüft, ob ein Hauptschalter für Ventilatoren oder Lüfter in dem Gondelumrichterschrank 410 deaktiviert ist.

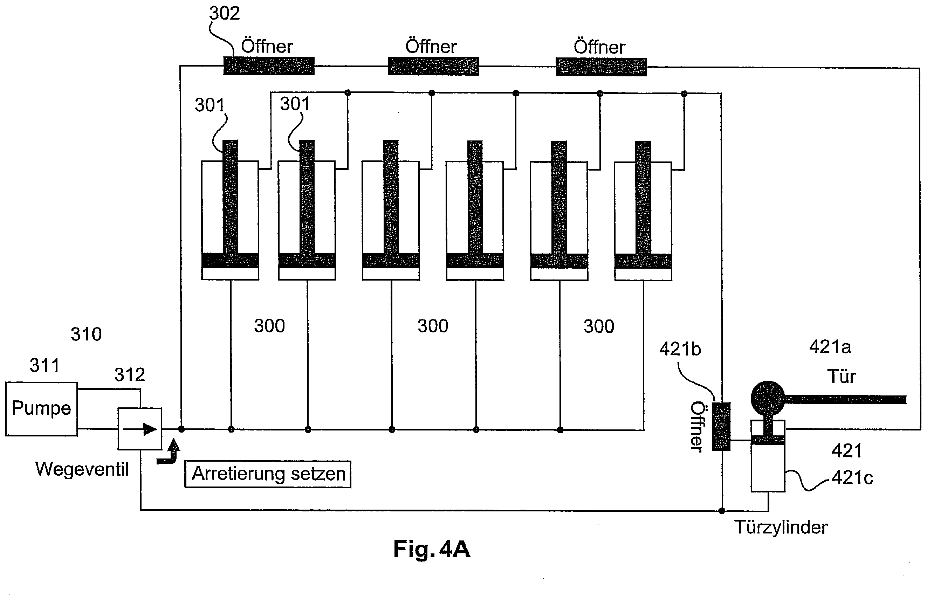

Fig. 4A - 4C zeigen jeweils ein Hydraulikschema der Windenergieanlage gemäß einem dritten Ausführungsbeispiel. In dem Hydraulikschema sind z. B. drei Arretiereinheiten 300 (an dem Generator-Rotor) jeweils mit beispielsweise zwei Arretierbolzen 301 vorhanden. Ferner ist eine Hydrauliksteuereinheit 310 mit einer Hydraulikpumpe 311 und einem Hydraulikwegeventil 312 gezeigt. Des Weiteren ist mindestens eine Türschließeinheit 421 mit einer hydraulisch verschließbaren Tür 421a, einem hydraulisch betätigbaren Öffner 421b und einem Hydrauliktürzylinder 421c gezeigt.

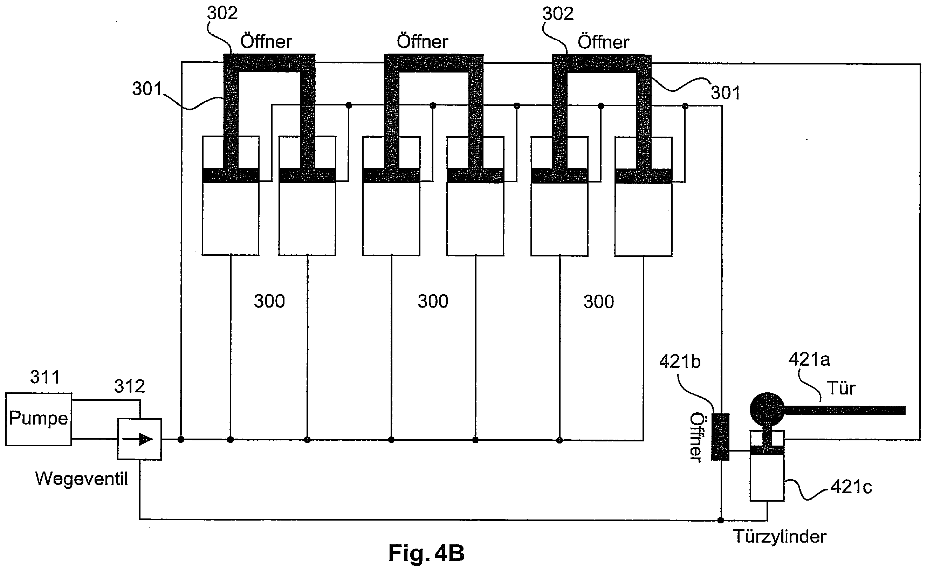

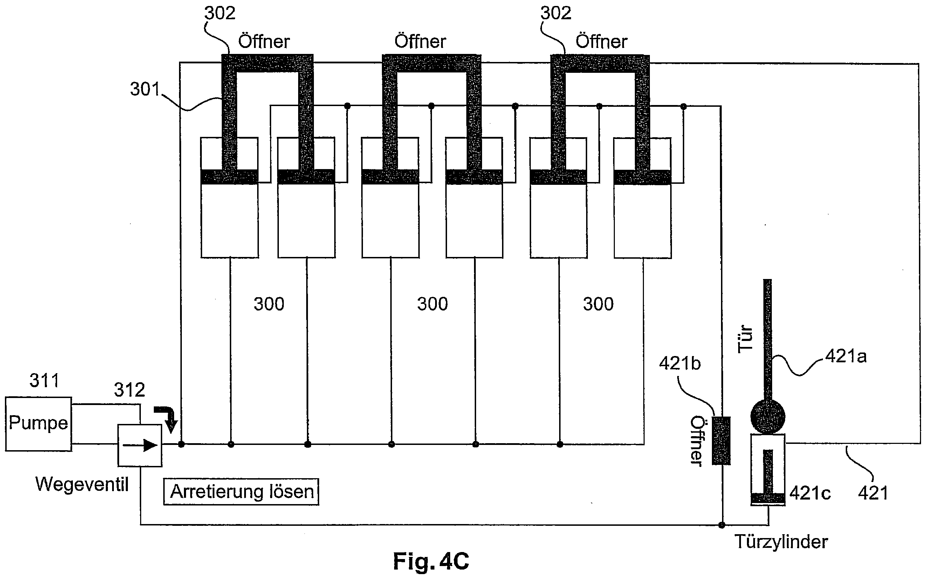

Wenn sich das Wegeventil 312 in einer ersten Betriebsart befindet, dann wird die Arretierung der Arretiereinheiten 300 aktiviert, so dass die Bolzen 301 ausgefahren werden und jeweils mit einem der Öffner 302 verriegelt werden. Diese Situation ist in Fig. 4B gezeigt. Anschließend kann das Wegeventil 312 in einer zweiten Betriebsart derart eingestellt sein (s. Fig. 4C), dass bei aktivierten Arretiereinheiten 300 die Tür 411, 421, 431 entriegelt werden kann, so dass Servicepersonal in die Bereiche 410, 420, 430 eintreten kann.

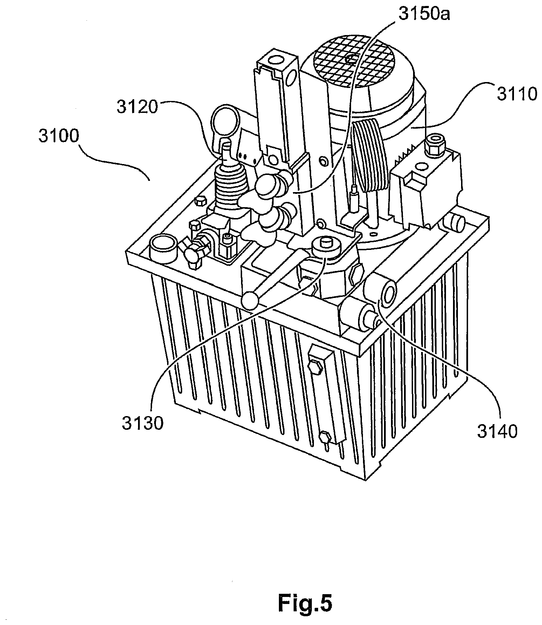

Fig. 5 zeigt eine schematische Ansicht einer Hydrauliksteuereinheit eines Zugangskontrollsystems gemäß einem vierten Ausführungsbeispiel. Die Hydrauliksteuereinheit 3100 ist Teil eines Zugangskontrollsystems 500 für eine Windenergieanlage. Hierbei kann das Zugangskontrollsystem 500 gemäß dem vierten Ausführungsbeispiel auf einem Zugangskontrollsystem gemäß dem ersten, zweiten oder dritten Ausführungsbeispiel beruhen. Durch das Zugangskontrollsystem 500 soll insbesondere vermieden werden, dass ein Zugang zu den sich drehenden Teilen der Windenergieanlage, z. B. der Spinner der Windenergieanlage, möglich ist. Die Hydrauliksteuereinheit 3100 weist eine elektrische hydraulische Pumpe 3110, eine Handpumpe 3120, ein Hydraulikumschaltventil 3130, Schnellkupplungen 3140 für Hydraulikschläuche und eine Hydraulikschlüsseleinheit 3150a auf. Mit dem Umschaltventil 3130 kann der Durchfluss der Hydraulikflüssigkeit aktiviert oder deaktiviert werden. Mittels der Hydraulikschlüsseleinheit 3150a soll sichergestellt werden, dass das Umschlagventil 3130 nur unter bestimmten Bedingungen frei gegeben wird. Die Hydraulikschlüsseleinheit 3150a ist Teil des Zugangskontrollsystems.

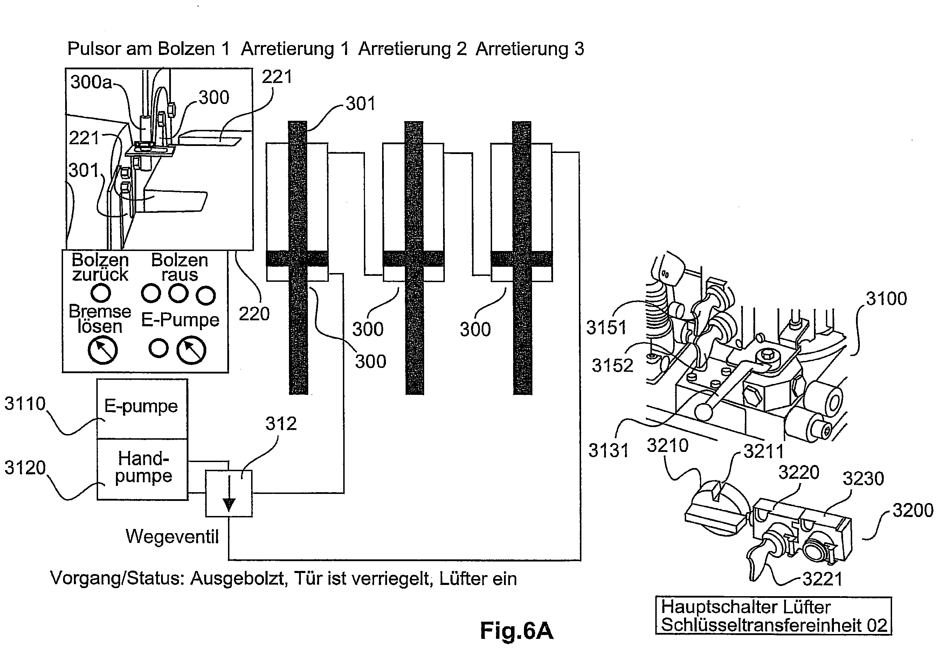

Fig. 6A-6D zeigen jeweils eine schematische Darstellung einer Funktionsweise eines Zugangskontrollsystems gemäß dem vierten Ausführungsbeispiel. Mittels der Arretiereinheit 300, welche über ausfahrbare Bolzen 301 verfügt, soll der Generator-Rotor 220 arretiert werden. Hierzu können die Bolzen 301 in entsprechende Ausnehmungen 221 in dem Generator-Rotor 220 verfahren werden. Ein Pulsor oder ein anderer optischer, elektrischer oder magnetischer Sensor 300a ist im Bereich der Arretiereinheit 300 vorgesehen und überwacht, ob die Bolzen 301 ausgefahren sind oder nicht. Dies ist in den Fig. 6A-6D jeweils oben rechts gezeigt.

In der Mitte der Fig. 6A - 6D sind die Arretiereinheiten 300 mit den ausfahrbaren Bolzen 301 jeweils schematisch gezeigt. Die Arretiereinheiten 300 sind über Hydraulikleitungen mit einem Wegeventil 3130 und der Handpumpe 3120 und/oder der elektrischen Pumpe 3110 gekoppelt.

In den Fig. 6A - 6D ist auf der rechten Seite jeweils ein Ausschnitt der Hydrauliksteuereinheit 3100 zu verschiedenen Zeitpunkten während der Arretierung des Rotors gezeigt. Ferner ist in den Fig. 6A - 6D rechts unten jeweils schematisch eine Lüfter-Schlüsseleinheit 3200 als zweiter Teil der Schlüsseltransfereinheit 500 gezeigt.

In Fig. 6A ist die Situation gezeigt, bei der die beiden Schüssel 3151, 3152 der ersten Hydraulik-Schlüsseltransfereinheit 3150 um 90° gedreht worden sind und die Bolzen 301 sind nicht ausgefahren. Das Drehen der Schlüssel 3151, 3152 und damit ein Entfernen der Schlüssel 3151, 3152 kann nur erfolgen, wenn der Hebel 3131 des Umschaltventils 3130 in die richtige Position gebracht worden ist. Zu diesem Zeitpunkt kann die Arretierung des Rotors aktiviert werden, indem die Handpumpe 3120 betätigt wird.

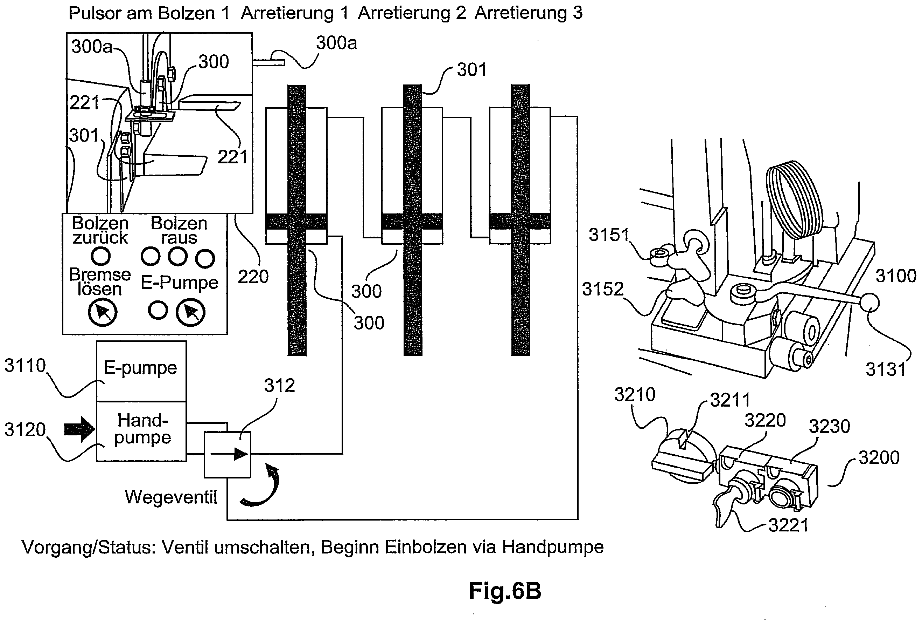

In Fig. 6B ist der Zeitpunkt gezeigt, bei dem die Bolzen 301 nicht ausgefahren sind. Zu diesem Zeitpunkt ist beispielsweise eine Zugangstür verriegelt und/oder der Lüfter ist eingeschaltet. Somit kann die Windenergieanlage gemäß der Erfindung ihren Normalbetrieb aufnehmen. Während des Normalbetriebs der Windenergieanlage (d.h. der Rotor ist nicht arretiert) befinden sich die Schlüssel 3151 und 3152 in einer Grundposition. Die Schlüssel können nicht entnommen werden. Das Umschaltventil 3130 ist optional frei schwenkbar.

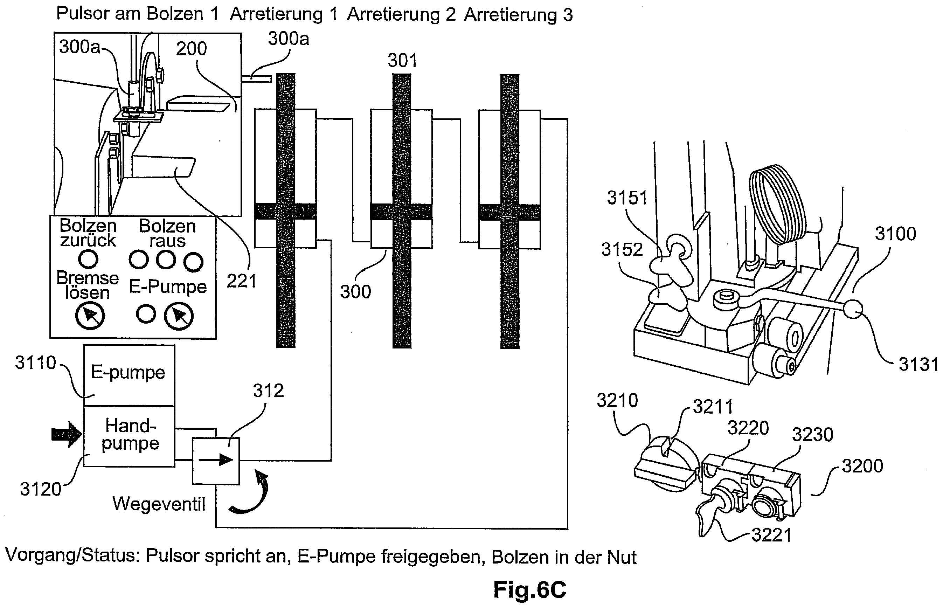

In Fig. 6C ist die Situation gezeigt, bei der die Bolzen 301 teilweise ausgefahren sind. Dies wird durch den optischen Sensor 300a erfasst und die elektrische Pumpe 3110 wird frei gegeben, so dass die Bolzen 301 weiter ausgefahren werden können.

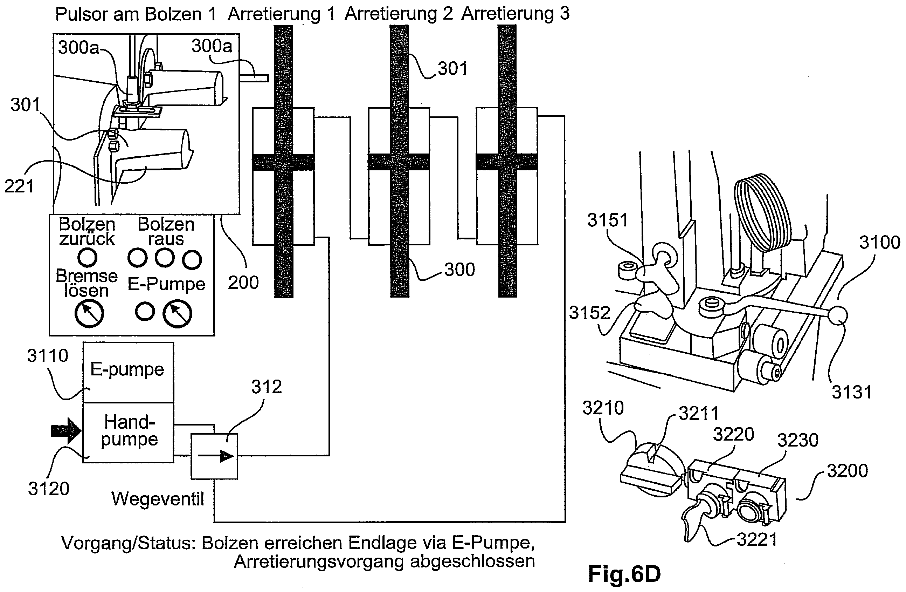

In Fig. 6D ist die Situation gezeigt, bei der die Bolzen 301 komplett ausgefahren sind und sich somit innerhalb der Ausnehmungen 221 befinden. Damit ist der Arretierungsvorgang abgeschlossen und der Rotor 106 der Windenergieanlage kann sich nicht mehr drehen.

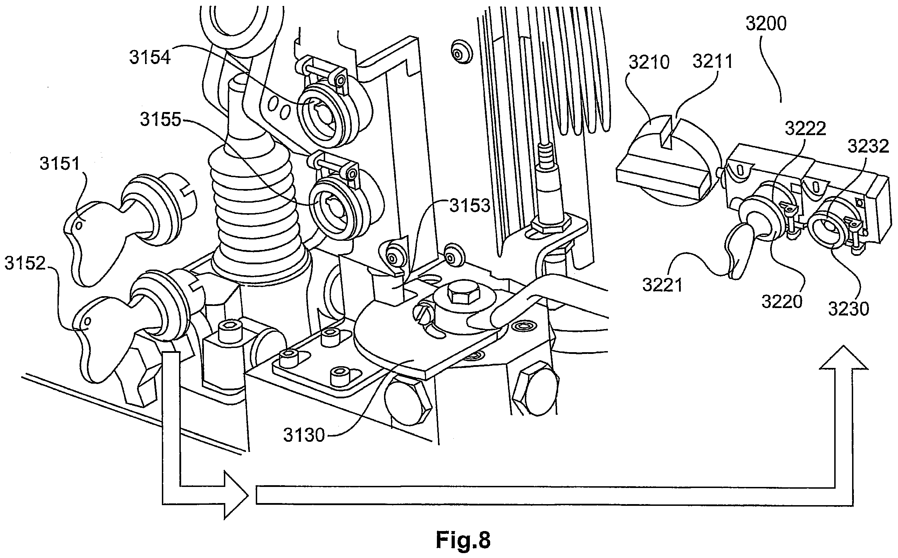

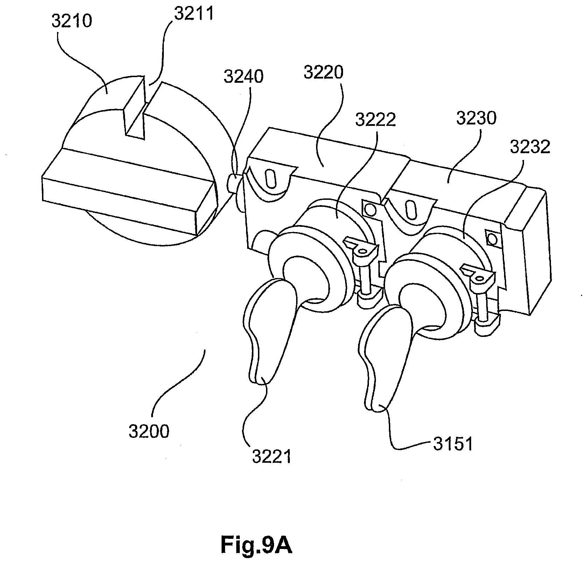

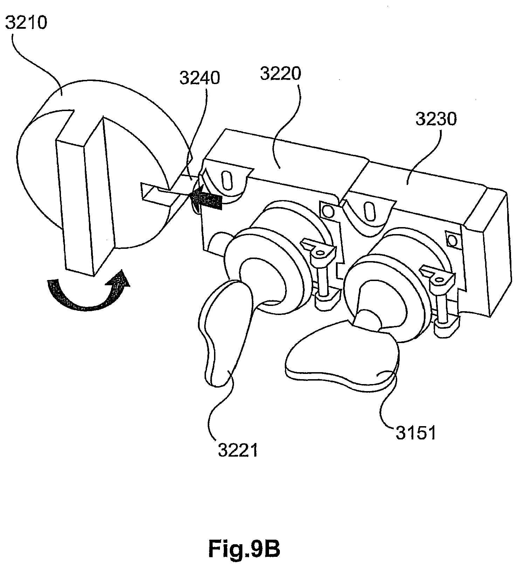

In den Fig. 6A - 6D ist rechts unten jeweils eine Lüfter-Schlüsseleinheit 3200 als zweiter Teil der Schlüsseltransfereinheit 500 gezeigt. Die Lüfter-Schlüsseleinheit 3200 wird näher in Fig. 8 und Fig. 9A und 9B beschrieben. In den in den Fig. 6A - 6D gezeigten Zuständen ist der Lüfterschalter 3210 auf "ein" eingestellt und die Lüfter-Schlüsseltransfereinheit 3200 ist arretiert.

In dem in Fig. 6A gezeigten Zustand ist der Hebel 3131 des Umschaltventils 3130 in einer ersten Position, in der die Hydraulik-Schlüsseleinheit und die beiden Schlüssel 3151, 3152 arretiert sind und somit nicht abgezogen werden können. In Fig. 6B ist der Hebel 3131 in einer zweiten Position. Entsprechendes gilt für die Situation in den Fig. 6C und 6D.

In den in den Fig. 6A- 6D gezeigten Situationen sind die beiden Schlüssel 3151, 3152 in der Hydraulik-Schlüsseleinheit 3150 arretiert und können nicht abgezogen werden. In Fig. 6B - 6D ist der Hebel 3131 des Umschaltventils 3130 in einer Einbolzposition. Dadurch ist eine Ausnehmung unterhalb des Bolzens angeordnet.

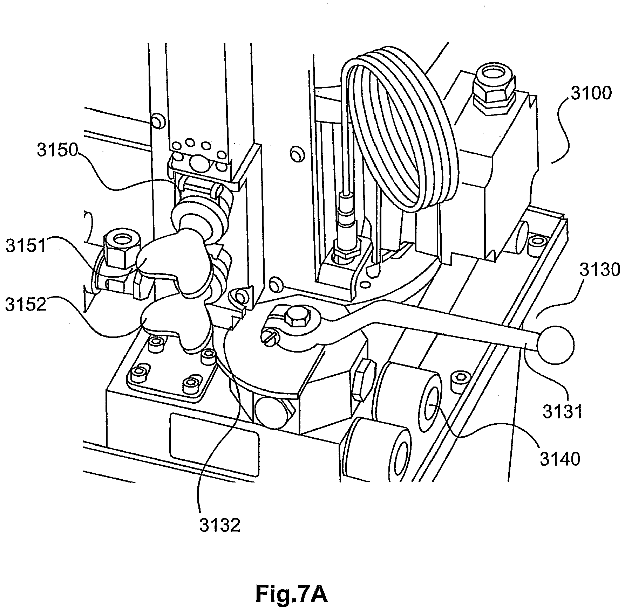

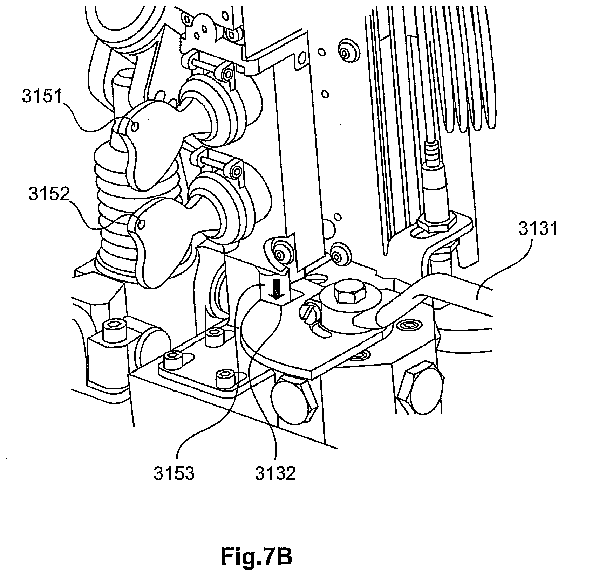

Fig. 7A und 7B zeigen jeweils eine Detailansicht der Hydrauliksteuereinheit von Fig 5.

In Fig. 7A ist der Zeitpunkt gemäß Fig. 6B gezeigt. Die beiden Schlüssel 3151, 3152 sind jeweils betätigt worden, um einen Bolzen 3153 freizugeben.

In Fig. 7B ist die Situation gezeigt, bei der der erste und zweite Schlüssel 3151, 3152 betätigt worden sind, so dass der Bolzen 3153 ausgefahren wird. Dabei fährt der Bolzen 3153 in eine Ausnehmung 3132 der Umschaltventileinheit 3130 ein und arretiert somit die Umschaltventileinheit 3130.

In Fig. 7A ist die Ausnehmung 3132 gezeigt, welche unterhalb des ausfahrbaren Bolzens angeordnet ist. In dem Ausführungsbeispiel von Fig. 7A und 7B sind die beiden Schlüssel 3151, 3152 drehbar. In Fig. 7B sind die Schlüssel in Längsrichtung des ausfahrenden Bolzens ausgerichtet und sind entnehmbar.

Fig. 8 zeigt eine schematische Darstellung zur Veranschaulichung eines erfindungsgemäßen Schlüsseltransfersystems eines Zugangskontrollsystems. Nachdem der Bolzen 3153 ausgefahren worden ist und sich somit in der Ausnehmung 3132 befindet, kann die Umschlagventileinheit 3130 nicht betätigt werden. Anschließend können die beiden Schlüssel 3151 und 3152 entfernt werden und einer der Schlüssel kann in die Lüfter-Schlüsseltransfereinheit 3200 eingeführt werden, um den Lüfter zu deaktivieren. Die Lüfter-Schlüsseltransfereinheit 3200 weist eine erste und zweite Schlüsseleinheit 3220, 3230 auf. In die erste Schlüsseleinheit 3220 wird ein erster Lüfter-Schlüssel 3221 eingeführt. Die zweite Schlüsseleinheit 3232 dient der Aufnahme des ersten Schlüssels 3151.

Fig. 9A und 9B zeigen schematische Darstellungen einer Lüfter-Schlüsseleinheit für einen Lüfter gemäß der Erfindung. In Fig. 9A und 9B sind zwei verschiedene Zustände der Lüfter-Schlüsseleinheit 3200 gezeigt. In Fig. 9A ist der erste Zustand gezeigt, bei dem der Lüfter noch aktiviert ist und der erste Schlüssel 3151 in die zweite Schlüsseleinheit 3230 eingeführt wird. In Fig. 9B ist die Situation gezeigt, bei der der erste Schlüssel 3151 in der zweiten Schlüsseleinheit 3230 platziert ist und um 90° gedreht ist. Der Lüfter muss vorher ausgeschaltet werden, damit der Bolzen 3240 der Lüfter-Schlüsseleinheit 3200 in die Ausnehmung 3211 eingeschoben werden kann. Dazu kann das Bedienelement 3210 um 90° gedreht werden. In diesem Fall kann ein Bolzen 3240 in die Ausnehmung 3211 der Bedieneinheit 3210 eingeführt werden und kann damit die Bedieneinheit 3210 des Lüfters verriegeln.

In Fig. 9A ist der Lüfter eingeschaltet, der Lüfter-Schlüssel 3221 ist verriegelt und der Schlüssel 3151 ist eingesteckt. In Fig. 9B ist der Schlüssel 3151 gedreht und somit verriegelt. Gleichzeitig ist der Lüfter-Schlüssel 3221 entriegelt und kann entfernt werden. Gleichzeitig fährt der Bolzen 3240 in die Ausnehmung 3211 ein und verriegelt das Bedienelement des Lüfters. Damit ist der Lüfter ausgeschaltet.

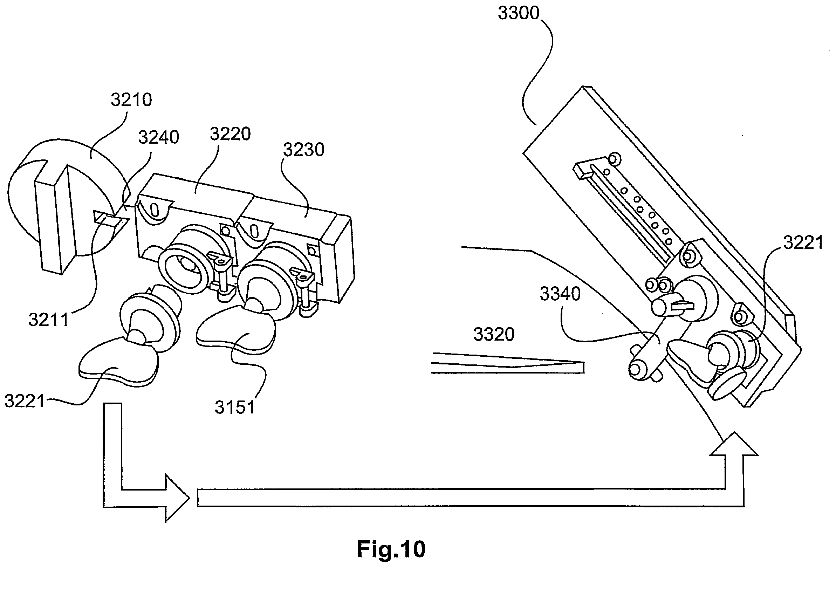

Fig. 10 zeigt eine schematische Darstellung eines Ausschnitts eines Schlüsseltransfersystems gemäß der Erfindung. In Fig. 10 ist die Situation gezeigt, bei der der Lüfter ausgeschaltet ist und der Bolzen 3240 in die Ausnehmung 3211 eingeführt ist. Der erste Schlüssel 3151 befindet sich in einem verriegelten Zustand und der Lüfter-Schlüssel 3221 kann dann entfernt werden und kann in eine Zugangstür-Schlüsseleinheit 3300 als dritter Teil der Schlüsseltransfereinheit 500 platziert werden, um die Zugangstür 3320 zu entriegeln. Erst nachdem der Schlüssel 3221 in die Zugangstür-Schlüsseleinheit 3300 eingeführt und betätigt worden ist, kann die Tür 3320 entriegelt werden.

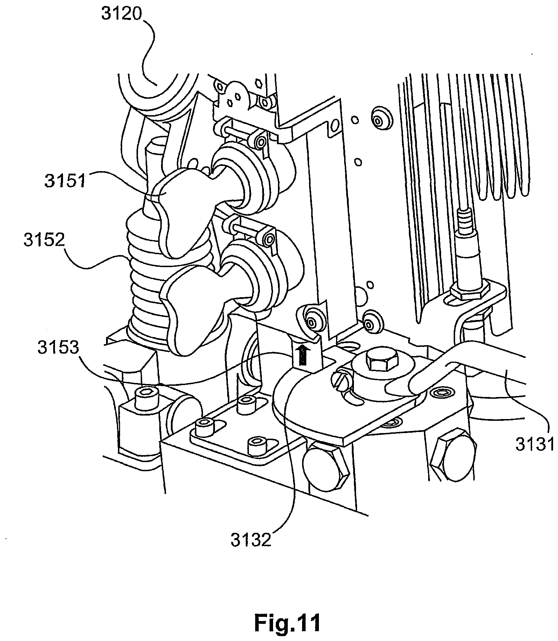

Fig. 11 zeigt einen weiteren Ausschnitt des Hydrauliksteuersystems von Fig. 5. In Fig. 11 ist der Zustand gezeigt, bei dem der Rotor 106 der Windenergieanlage entriegelt werden soll. Wenn die Freigabe zum Arretieren erteilt wurde, dann können die Schlüssel 3151, 3152 um 90 Grad gedreht werden, wenn das Umschaltventil in die entsprechende Stellung gebracht wurde, so dass der Bolzen 3153 der Schlüsseleinheit in die Ausnehmung geschoben werden kann. Damit kann die Arretierung nur in die Arretierrichtung betätigt werden.

In Fig. 11 ist die Ventilstellung des Umschaltventils auf Einbolzen eingestellt und der Schlüssel 3151 ist eingesteckt. Hierbei kann der Bolzen 3153 z. B. beim Drehen des Schlüssels 3151 einfahren und somit den Hebel 3131 freigeben.

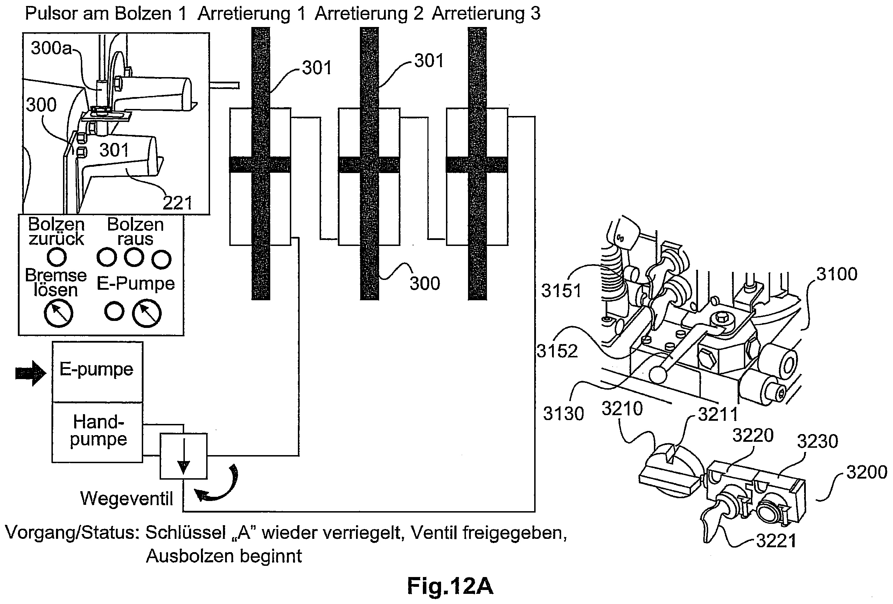

Fig. 12A-12B zeigen jeweils eine schematische Ansicht zur Veranschaulichung des erfindungsgemäßen Zugangskontrollsystems. In Fig. 12A ist die Situation gezeigt, bei der der Generator-Rotor oder der Rotor 106 der Windenergieanlage mittels der Bolzen 301 der Arretiereinheit arretiert ist (s. oben links). Mit anderen Worten, die Bolzen 301 sind ausgefahren und befinden sich in den Ausnehmungen 221 des Generator-Rotors. Der erste und zweite Schlüssel 3151, 3152 befinden sich jeweils in der Schlüsseltransfereinheit und die Umschlagventileinheit 3130 ist arretiert (s. rechts). Der dritte Schlüssel 3221 befindet sich in der Lüfter-Schlüsseleinheit 3200 und der Lüfter ist eingeschaltet. Ferner ist sowohl die elektrische Pumpe 3110 als auch die Handpumpe 3120 aktiviert.

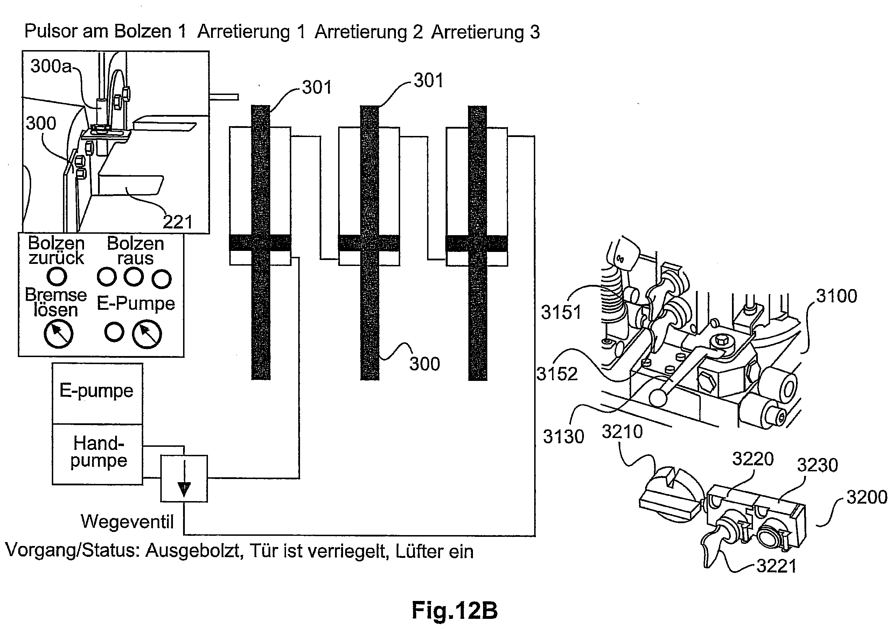

In Fig. 12B ist die Situation gezeigt, bei der die Bolzen 301 in die Arretiereinheit 300 zurückgefahren sind und der Rotor somit nicht mehr arretiert ist. In diesem Fall ist die elektrische Pumpe 3110 deaktiviert.

Um den Rotor wieder frei zu geben, muss der Schlüssel 3221 aus der Zugangstür-Schlüsseleinheit 3300 entfernt werden. Dies kann jedoch erst erfolgen, wenn die Zugangstür 3320 geschlossen ist. Der Schlüssel 3221 muss dann in die Lüfter-Schlüsseleinheit 3200 und dort in die erste Schlüsseleinheit 3220 eingeführt und um 90° gedreht werden. Der Schlüssel 3151 muss ebenfalls um 90° gedreht werden und kann dann entfernt werden, um in die Hydraulik-Schlüsseleinheit eingeführt zu werden. Erst wenn beide Schlüssel 3151, 3152 eingeführt und um 90° gedreht worden sind, dann kann der Bolzen 3153 wieder eingefahren werden und das Umschlagventil 3130 kann mittels des Hebels 3131 wieder zurückgeführt werden.

Gemäß einem Beispiel kann die Lüfterschlüsseleinheit entfallen. In diesem Fall kann der erste Schlüssel 3151 für die Aktivierung der Hydrauliksteuereinheit und ein zweiter Schlüssel kann als Schlüssel 3221 für die Zugangstür-Schlüsseleinheit 3330 verwendet werden, d. h. der Schlüssel 3131 kann zum Entriegeln der Zugangstür verwendet werden. Somit kann sichergestellt werden, dass die Hydraulikeinheit nicht umgeschaltet wird, um die Verriegelung des drehenden Teils der Gondel freizugeben. Der Schlüssel der Hydraulikschlüsseleinheit steckt nämlich so lange in der Zugangstürschlüsseleinheit, wie die Zugangstür offen ist. Wenn die Zugangstür verschlossen wird, kann der Schlüssel erst entnommen werden und in die Hydraulik-Schlüsseleinheit eingeführt werden, um die Verriegelung der Hydraulikeinheit aufzuheben. Damit wird sichergestellt, dass die Zugangstür geschlossen ist, wenn die Ventilstellung der Hydraulikeinheit verändert wird.

## Patentansprüche

1. Windenergieanlage, mit
mindestens einem abgeschlossenen Bereich (410; 420) mit mindestens einer Zugangstür (3320),
einer Gondel (104) mit einem feststehenden Bereich und einem Rotor (106),
mindestens einer Arretiereinheit (300) zum Arretieren des Rotors (106), und
einem Zugangskontrollsystem (500), welches eine Verriegelung der mindestens einen Zugangstür (411, 421, 431) zu dem abgeschlossenen Bereich (410, 420, 430) in Abhängigkeit einer Arretierung des Rotors (106) durch die mindestens eine Arretiereinheit (300) steuert,
**dadurch gekennzeichnet, dass** der abgeschlossene Bereich einen Umrichterschrank (410) mit einem Lüfter (410a) in der Gondel darstellt, das Zugangskontrollsystem (500) ein Schlüsseltransfersystem (3150, 3200, 3300) und eine Hydrauliksteuereinheit (3100) zum Steuern der Arretiereinheit (300) aufweist,
wobei das Schlüsseltransfersystem eine Hydraulik-Schlüsseleinheit (3150) zum Verhindern einer unbeabsichtigten Aktivierung der Hydrauliksteuereinheit (3100) und eine Zugangstür-Schlüsseleinheit (3300) zum Verriegeln oder Entriegeln der Zugangstür (411, 422, 431) aufweist,
wobei das Schlüsseltransfersystem (3150) mindestens einen ersten und zweiten Schlüssel aufweist, wobei mittels des ersten Schlüssels die Hydraulik-Steuereinheit (3100) verriegelt oder entriegelt wird,
wobei mittels des zweiten Schlüssels die Zugangstür-Schlüsseleinheit (3330) verriegelt oder entriegelt wird,
wobei das Schlüsseltransfersystem ferner eine Lüfter-Schlüsseltransfereinheit (3200) zum Aktivieren oder Deaktivieren des Lüfters (410a) aufweist,
wobei die Lüfter-Schlüsseltransfereinheit (3200) eine erste Schlüsseleinheit (3220), in welche ein erster Lüfter-Schlüssel (3221) einführbar ist, und eine zweite Schlüsseleinheit (3230) aufweist, welche zur Aufnahme des ersten Schlüssels (3151) dient,
wobei der erste Schlüssel der Hydraulik-Schlüsseleinheit zum Verriegeln und Entriegeln der Lüfter-Schlüsseltransfereinheit (3200) verwendet wird und der erste Lüfterschlüssel als zweiter Schlüssel zum Verriegeln oder Entriegeln der Zugangstür-Schlüsseleinheit (3300) verwendet wird.

2. Windenergieanlage nach Anspruch 1, mit
einer Steuereinheit (310) zum Steuern der mindestens einen Arretiereinheit (300).

3. Windenergieanlage nach Anspruch 1 oder 2, wobei
die Arretiereinheit (300) und/oder die Zugangstür (411, 421, 431) hydraulisch betätigbar sind.

4. Verfahren zum Steuern eines Zugangs in einen abgeschlossenen Bereich einer Windenergieanlage nach einem der Ansprüche 1 bis 3, wobei der abgeschlossene Bereich mindestens eine Zugangstür aufweist, wobei die Windenergieanlage eine Gondel mit einem feststehenden Bereich und einem Rotor (106) und eine Arretiereinheit (300) zum Arretieren des Rotors (106) aufweist, wobei der abgeschlossene Bereich einen Umrichterschrank (410) mit einem Lüfter (410a) in der Gondel darstellt, mit den Schritten:
Verriegeln der mindestens einen Zugangstür (411, 421, 431) zu dem abgeschlossenen Bereich (410, 420, 430) in Abhängigkeit einer Arretierung des Rotors (106) durch die mindestens eine Arretiereinheit (300),
Verriegeln oder Entriegeln der Zugangstür durch eine Zugangstür-Schlüsseleinheit (3300),
**gekennzeichnet durch** Verriegeln oder Entriegeln einer Hydraulik-Steuereinheit zum Steuern der Arretiereinheit (200) durch einen ersten Schlüssel,
Verriegeln oder Entriegeln einer Zugangstür-Schlüsseleinheit (3330) durch einen zweiten Schlüssel,
Aktivieren oder Deaktivieren des Lüfters (410a) mittels einer Lüfter-Schlüsseltransfereinheit (3200),
Verriegeln oder Entriegeln der Lüfter-Schlüsseltransfereinheit (3200) durch den ersten Schlüssel, und
Verriegeln oder Entriegeln der Zugangstür-Schlüsseleinheit mittels eines Lüfterschlüssels als zweiter Schlüssel,
wobei die Lüfter-Schlüsseltransfereinheit (3200) eine erste Schlüsseleinheit (3220) aufweist, in welche der erste Lüfter-Schlüssel (3221) einführbar ist und eine zweite Schlüsseleinheit (3230) aufweist, welche zur Aufnahme des ersten Schlüssels (3151) dient.

## Claims

1. Wind turbine, having
at least one closed-off region (412; 420) with at least one access door (3320),
a nacelle (104) with a stationary region and a rotor (106),
at least one blocking unit (300) for blocking the rotor (106), and
an access control system (500), which controls a locking of the at least one access door (411, 421, 431) to the closed-off region (410, 420, 430) depending on a blocking of the rotor (106) by the least one blocking unit (300),
**characterized in that**
the closed-off region is a converter cabinet (410) with a fan (410a) in the nacelle, wherein the access control system (500) comprises a key transfer system (3150, 3200, 3300) and a hydraulic control unit (3100) for controlling the blocking unit (300),
wherein the key transfer system comprises a hydraulic key unit (3150) for preventing an unintentional activation of the hydraulic control unit (3100) and an access door key unit (3300) for locking or unlocking the access door (411, 422, 431),
wherein the key transfer system (3150) having at least one first and second key, wherein the hydraulic control unit (3100) being locked or unlocked by means of the first key,
wherein the access door key unit (3330) being locked or unlocked by means of the second key,
wherein the key transfer system also having a fan key transfer unit (3200) for activating or deactivating a fan (410a),
wherein the fan key transfer unit (3200) comprises a first key unit (3220), into which the first fan key (3221) can be introduced, and a second key unit (3230), which serves to receive the first key (3151),
wherein the first key of the hydraulic key unit being used to lock and unlock the fan key transfer unit (3200), and the first fan key being used as a second key for locking or unlocking the access door key unit (3300).

2. Wind turbine according to Claim 1, having
a control unit (310) for controlling the at least one blocking unit (300).

3. Wind turbine according to Claim 1 or 2,
the blocking unit (300) and/or the access door (411, 421, 431) being hydraulically actuatable.

4. Method for controlling access into a closed-off region of a wind turbine according to one of the claims 1 to 3, the closed-off region having least one access door, the wind turbine having a nacelle with a stationary region and a rotor (106) and a blocking unit (300) for blocking the rotor (106), wherein the closed off region is a converter cabinet (410) with a fan (410a) in the nacelle, said method having the following steps:
locking the at least one access door (411, 421, 431) to the closed-off region (410, 420, 430) depending on a blocking of the rotor (106) by the at least one blocking unit (300), locking or unlocking the access door by an access door key unit (3300),
**characterized by** locking or unlocking a hydraulic control unit for controlling the blocking unit (200) by a first key,
locking or unlocking an access door key unit (3330) by means of a second key,
activating or deactivating the fan (410a) by means of a fan key transfer unit (3200),
locking or unlocking the fan key transfer unit (3200) by the first key, and
locking or unlocking the access door key unit by means of a fan key as second key,
wherein the fan key transfer unit (3200) comprises a first key unit (3220), into which the first fan key (3221) can be introduced, and a second key unit (3230), which serves to receive the first key (3151).

## Revendications

1. Éolienne, avec
au moins une zone fermée (410 ; 420) avec au moins une porte d'accès (3320),
une nacelle (104) avec une zone fixe et un rotor (106),
au moins une unité d'arrêt (300) pour arrêter le rotor (106), et
un système de contrôle d'accès (500), qui commande un verrouillage de l'au moins une porte d'accès (411, 421, 431) à la zone fermée (410, 420, 430) en fonction d'un arrêt du rotor (106) par l'au moins une unité d'arrêt (300),
**caractérisée en ce que** la zone fermée représente une armoire de convertisseur (410) avec un ventilateur (410a) dans la nacelle, le système de contrôle d'accès (500) présente un système de transfert de clé (3150, 3200, 3300) et une unité de commande hydraulique (3100) pour commander l'unité d'arrêt (300),
dans laquelle le système de transfert de clé présente une unité de clé hydraulique (3150) pour empêcher une activation involontaire de l'unité de commande hydraulique (3100) et une unité de clé de porte d'accès (3300) pour verrouiller ou déverrouiller la porte d'accès (411, 422, 431),
dans laquelle le système de transfert de clé (3150) présente au moins une première et deuxième clé, dans laquelle l'unité de commande hydraulique (3100) est verrouillée et déverrouillée au moyen de la première clé,
dans laquelle l'unité de clé de porte d'accès (3330) est verrouillée et déverrouillée au moyen de la deuxième clé,
dans laquelle le système de transfert de clé présente en outre une unité de transfert de clé de ventilateur (3200) pour activer ou désactiver le ventilateur (410a),
dans laquelle l'unité de transfert de clé de ventilateur (3200) présente une première unité de clé (3220), dans laquelle une première clé de ventilateur (3221) peut être introduite, et une deuxième unité de clé (3230), qui sert à recevoir la première clé (3151),
dans laquelle la première clé de l'unité de clé hydraulique est utilisée pour verrouiller et déverrouiller l'unité de transfert de clé de ventilateur (3200) et la première clé de ventilateur est utilisée en tant que deuxième clé pour verrouiller ou déverrouiller l'unité de clé de porte d'accès (3300).

2. Éolienne selon la revendication 1, avec
une unité de commande (310) pour commander l'au moins une unité d'arrêt (300).

3. Éolienne selon la revendication 1 ou 2, dans laquelle
l'unité d'arrêt (300) et/ou la porte d'accès (411, 421, 431) sont actionnables hydrauliquement.

4. Procédé de commande d'un accès à une zone fermée d'une éolienne selon l'une quelconque des revendications 1 à 3, dans lequel la zone fermée présente au moins une porte d'accès, dans lequel l'éolienne présente une nacelle avec une zone fixe et un rotor (106) et une unité d'arrêt (300) pour arrêter le rotor (106), dans lequel la zone fermée représente une armoire de convertisseur (410) avec un ventilateur (410a) dans la nacelle, avec les étapes de :
verrouillage de l'au moins une porte d'accès (411, 421, 431) à la zone fermée (410, 420, 430) en fonction d'un arrêt du rotor (106) par l'au moins une unité d'arrêt (300),
verrouillage ou déverrouillage de la porte d'accès par une l'unité de clé de porte d'accès (3300),
**caractérisée par** le verrouillage ou déverrouillage d'une unité de commande hydraulique pour commander l'unité d'arrêt (200) par une première clé,
le verrouillage ou déverrouillage d'une unité de clé de porte d'accès (3330) par une deuxième clé,
l'activation ou désactivation du ventilateur (410a) au moyen d'une unité de transfert de clé de ventilateur (3200),
le verrouillage ou déverrouillage de l'unité de transfert de clé de ventilateur (3200) par la première clé, et
le verrouillage ou déverrouillage de l'unité de clé de porte d'accès au moyen d'une clé de ventilateur en tant que deuxième clé,
dans lequel l'unité de transfert de clé de ventilateur (3200) présente une première unité de clé (3220), dans laquelle la première clé de ventilateur (3221) peut être introduite, et une deuxième unité de clé (3230), qui sert à recevoir la première clé (3151).
